# EUROPÄISCHE PATENTANMELDUNG

(11) **EP 2 200 263 A1**
(43) Veröffentlichungstag der Anmeldung: **23.06.2010**
(21) Anmeldenummer: 09179161.6
(22) Anmeldetag: 15.12.2009
(51) Int. Cl.: H04M 1/725

(54) **Verfahren zur Steuerung einer Benutzerschnittstelle**

(30) Priorität: 19.12.2008 DE 102008055011
(71) Anmelder: Deutsche Telekom AG, 53113 Bonn (DE)
(72) Erfinder: Brackmann, Ludwig, 53225, Bonn (DE)

(57) **Zusammenfassung**

Verfahren zur Steuerung einer Benutzerschnittstelle eines elektronischen Gerätes, insbesondere Benutzerschnittstelle eines Mobiltelefons mit einem berührungsempfindlichen grafischen Display,
wobei in einem ersten Schritt ein Nutzerprofil vorgegeben wird,
wobei in einem zweiten Schritt am Gerät ausführbare Funktionen entsprechend ihrer Relevanz im Verhältnis zu dem Nutzerprofil bewertet werden und
wobei Menüpunkte, insbesondere in Form von Icons, zum Abruf und/oder zur Installation der am Gerät ausführbaren Funktionen in einer Art dargeboten werden, die ihrer Relevanz im Verhältnis zu dem Nutzerprofil entspricht.

## Beschreibung

Die vorliegende Erfindung betrifft ein Verfahren zur Steuerung einer Benutzerschnittstelle eines elektronischen Gerätes, insbesondere eines Mobiltelefons mit einem berührungsempfindlichen grafischen Display.

Die heutzutage angebotenen Mobiltelefone sind nicht mehr nur zum Telefonieren geeignet, sondern bieten dem Nutzer darüber hinaus viele weitere Anwendungsmöglichkeiten. Hierzu zählen beispielsweise die Internetnutzung, das Fotografieren, sich per Navigation leiten zu lassen, fernzusehen oder Radio zu hören. Diese Anwendungen werden teilweise in großer Anzahl auf einem lokalen Speichermedium zum Abruf bereit gehalten. Diese Anwendungen selber sind meist modular aufgebaut und bieten schon jede für sich eine Fülle von Bedien- und Einstellungsmöglichkeiten. Der Aufbau der Menüs und der darin enthaltenen Wahlmöglichkeiten sind jedoch werksseitig im Mobiltelefon festgelegt. Zur Einstellung wird dem Anwender meist ein kompliziert verästeltes Menü beispielsweise in Form einer Baumstruktur vorgegeben, wodurch die einzelnen Schritte zur Auswahl eines Befehls immer wieder nach diesen vorgegebenen Schemata abgespult werden müssen, beziehungsweise begrenzt manuell angepasst werden können.

Für aktuelle Mobiltelefone wie beispielsweise das Apple-iPhone^{®} stehen im Internet eine Vielzahl von zusätzlichen Programmen, Add-ons oder Plug-ins zur Installation bereit. Solche Funktionen werden auf vom Hersteller oder von Dritten verwalteten Internetportalen zum Download angeboten. Mit Hilfe der heruntergeladenen Software lässt sich der Funktionsumfang der Mobiltelefone auf die individuellen Vorlieben und Bedürfnisse des Nutzers anpassen. Diese Portale listen zwar die verfügbare Software nach Themengebieten sortiert auf, wie beispielsweise Spiele, Musik oder Lifestyle, aber selbst innerhalb der einzelnen Gebiete geht die Anzahl der angebotenen Software schnell in die Hunderte. Um Software für den Download auswählen zu können, ist der Anwender gezwungen, ganze Themengebiete nach dem gesuchten Programm abzusuchen, zumindest so lange er nicht den Namen kennt und diesen in eine Suchfunktion eingeben kann.

Werden Anwendungen aber vom Anwender als umständlich zu bedienen empfunden, werden sie oftmals nicht genutzt. Programme, die nur umständlich zu finden sind, werden gar nicht erst gesucht. Da mit jeder Entwicklungsstufe der Mobiltelefone oder ihrer Netzinfrastruktur neue nutzbare Anwendungen und Programme hinzukommen, werden die Menüs zur Bedienung, Auswahl und Installation dieser am Mobiltelefon ausführbaren Funktionen immer umfangreicher und damit zunehmend komplizierter und unübersichtlicher. Dem Anwender bietet aber eine weitere Funktion, die er nicht kennt oder aufgrund der umständlichen Bedienung nicht nutzt, keinen Mehrwert.

Die Aufgabe der vorliegenden Erfindung liegt nunmehr darin, ein mit einfachen Mitteln kostengünstig umzusetzendes Verfahren vorzuschlagen, das die Bedienung von elektronischen Geräten, insbesondere von Mobiltelefonen, vereinfacht und dem Anwender die Auswahl unter allen verfügbaren Funktionen erleichtert.

Diese Aufgabe wird durch ein Verfahren mit den kennzeichnenden Merkmalen des Anspruchs 1 gelöst. Vorteilhafte Ausgestaltungen sind in den Unteransprüchen genannt.
Der wesentliche Grundgedanke der Erfindung liegt darin, die am elektronischen Gerät ausführbaren Funktionen im Hinblick auf eine individuellen Nutzung zu bewerten und die Menüpunkte der Benutzerschnittstelle für den jeweiligen Nutzer individuell zu optimieren. Dabei kann die individuelle Nutzung Aspekte des Nutzerverhaltens, des Nutzungsverhalten und des Nutzungskontext umfassen. Dabei manifestiert sich das Nutzerverhalten in der Art, wie sich der Nutzer verhält, während das Nutzungsverhalten sich darin ausdrückt, was der Nutzer nutzt. Der Nutzungskontext beschreibt die Situation während einer Nutzung.

Erfindungsgemäß wird zunächst insbesondere entsprechend der Parameter der individuellen Nutzung ein Nutzerprofil vorgegeben und in einem zweiten Schritt die am Gerät ausführbaren Funktionen entsprechend ihrer Relevanz im Verhältnis zu dem Nutzerprofil bewertet. In einem nachfolgenden Schritt werden Menüpunkte der Benutzerschnittstelle, zum Beispiel auf einem Bildschirm des Gerätes dargestellte Icons oder Textmeldungen, zum Abruf und/oder zur Installation der Funktionen am Gerät in einer besonderen Art dargeboten, die ihrer Relevanz im Verhältnis zu dem Nutzerprofil entspricht. Diese besondere Art kann sich unterschiedlich manifestieren. Sie kann sich in einer priorisierten Reihenfolge und/oder in einer hervorgehobenen Aufmachung der Menüpunkte manifestieren. Die solchermaßen angeordneten und aufgemachten Menüpunkte werden dem Nutzer über die Benutzerschnittstelle des Gerätes, beispielsweise visuell oder akustisch dargeboten. Als Menüpunkte sind dabei über die Benutzerschnittstelle auswählbare Befehle zu verstehen, die bevorzugt als Icons oder Textmeldungen auf einem Bildschirm dargestellt oder in Form einer Sprachnachricht ausgegeben werden. Natürlich ist der erfindungsgemäße Gedanke auch für multimodale Anwendungsszenarien, also eine Mischung möglicher Kommunikationskanäle, anwendbar. Als Beispiel sei die Eingabe an das Endgerät per Sprache und die entsprechende Ausgabe über den Bildschirm genannt.

Die in ihrer Darbietung optimierten Menüpunkte bieten den Vorteil, dass sie auf die Bedürfnisse des Nutzers angepasst sind und ihm so die Bedienung seines Gerätes, nachfolgend vereinfachend auch nur "Mobiltelefon", erleichtern. Anhand des Nutzerprofils kann die vorgegebene Menüstruktur auf einfache Weise auf die individuelle Nutzung eingestellt werden. Beispielsweise können laut Nutzerprofil häufig genutzte Funktionen besonders gekennzeichnet, also dem Anwender hervorgehoben, angeboten werden. Dies kann insbesondere durch eine Veränderung der Farbe, der Größe oder der Form der dargestellten Icons erfolgen. Weiter kann die Reihenfolge der Menüpunkte angepasst werden, so dass bestimmte Funktionen als erstes über die Benutzerschnittstelle angeboten werden und er sich nicht erst zu ihnen durcharbeiten muss. Auch ist es möglich, Menüpunkte in andere Menüebenen oder auch in andere Module innerhalb der Menüstruktur zu verschieben. Insbesondere eignet sich das Verfahren, den Anwender auf für ihn besonders geeignete Funktionen aufmerksam zu machen und diese auf einfache Weise für ihn bereitzustellen. Der erfindungsgemäße Vorteil liegt also zusammengefasst darin, dass der Nutzer die für ihn relevante Gerätefunktion jederzeit "als erste" unmittelbar erreichen kann.

Dem Nutzer werden somit über die Schnittstelle des Mobiltelefons zuvorderst die Funktionen angeboten, die gemäß des Nutzungsprofils häufig und in der von ihm bevorzugten Art und Weise von ihm gebraucht werden, beziehungsweise in der aktuellen Situation für ihn von Interesse sein könnten. Funktionen, die er selten oder nie verwendet, treten in den Hintergrund. Damit wird die Bedienung des Mobiltelefons an die speziellen Bedürfnisse des Anwenders angepasst. Die Bedienung der von ihm genutzten Funktionen und das Auffinden noch nicht genutzter, aber für das Nutzerprofil relevante Funktionen des Mobiltelefons wird so entscheidend erleichtert.

Bevorzugt werden dem Anwender auf sein Nutzerprofil abgestimmte zusätzliche Funktionen zur Kenntnis gebracht, die er deshalb nicht mehr lange zu suchen braucht oder vielleicht gar nicht gekannt hat. Bucht der Nutzer beispielsweise des Öfteren Fahrkarten im Internet oder sucht er per Navigation Adressen, die Hotelstandorten zugeordnet sind, können ihm entsprechende Funktionen für diese Module vorgeschlagen werden.

Erfindungsgemäß ist es auch möglich, aufgrund des momentanen Standortes und/oder aufgrund besonderer Kenntnisse über die Umgebung, also aufgrund des Nutzungskontextes, bereits geladene oder nachzuladende Funktionen vorzuschlagen und eventuell sogar ohne Aufruf durch den Nutzer schon zu starten. Als Beispiel sei die Situation genannt, dass sich ein Nutzer in gemessener Fußgängergeschwindigkeit auf eine Bushaltestelle zu bewegt. In diesem Fall kann sein Mobiltelefon, insbesondere über das Netz, Fahrplaninformation mit aktuellen Abfahrzeiten laden und dem Nutzer ausgeben in der Art: "Beeil dich, der nächste Bus kommt in einer Minute".

Besonders bevorzugt werden die am Mobiltelefon ausführbaren Funktionen auf einem externen, mit dem Mobiltelefon verbindbaren Server vorgehalten und von dort zur Installation abgerufen, beispielsweise über ein Internetportal. Neben der von den Herstellern angebotenen Software gibt es immer mehr von Dritten angebotene Funktionen, insbesondere Programme, Add-ons oder Plug-ins, die für spezielle Anwendungen oder Situationen die Nutzungsmöglichkeiten eines Mobiltelefons verbessern oder erweitern. Schon die zur Zeit alleine für Geräte, wie das Apple-iPhone^{®} verfügbare Software lässt sich aufgrund ihrer Vielzahl nicht mehr übersichtlich darstellen. Trotz ihrer Anordnung in verschiedenen Rubriken fällt es dem Besucher des Stores schwer, das ihn Interessierende zu finden. So werden alleine unter der Rubrik Spiele zur Zeit über 1500 Programme zum Download angeboten. Interessante Software ist für den Nutzer aus der Menge des Angebots heraus nur zu ermitteln, wenn er den Namen der Software in die vorgehaltene Suchfunktion eingibt. Ist dieser ihm nicht bekannt, muss der Nutzer die Beschreibungen oder Rezessionen zu den Programmen durchlesen, um das für ihn Interessante zu finden.

Werden die für ein Mobiltelefon verfügbaren Funktionen gesammelt und in einem lokalen oder einem zentral zugänglichen Speicher vorgehalten, können sie leicht auf ihre Relevanz im Verhältnis zu dem Nutzerprofil überprüft werden. Derart bewertet lassen sie sich auf einfache Weise entsprechend der Relevanz sortieren. Die sortierte Software wird dann auf den Internetportalen nach den speziellen Vorlieben und Bedürfnissen des Nutzers angeordnet dargeboten. Jeder Nutzer erhält also beispielsweise bei seinem Besuch des Portals ein für ihn maßgeschneidertes Angebot. Ihm kann das Angebot auch in der Art einer Empfehlung "ungefragt" durch das System unterbreitet werden. Das Auffinden der für ihn relevanten Software wird durch die auf diese Weise angeordneten Programme entscheidend erleichtert.

In einer besonders bevorzugten Ausführungsform ist die Benutzerschnittstelle ein Touch-Screen. Ein solcher berührungsempfindlicher Bildschirm bietet dem Anwender eine gute Übersicht über die einzelnen Menüpunkte und ist damit besonders bedienerfreundlich. Zudem können Art und Reihenfolge der Darstellung einzelner Menüs oder Menüpunkte auf einfache Weise entsprechend diesem Verfahren angepasst werden.

Grundsätzlich ist das Verfahren aber auch für eine akustische Benutzerschnittstelle geeignet. Mobiltelefone werden vermehrt auch über Sprachbefehle gesteuert, beziehungsweise geben die verfügbaren Befehle oder Nachfragen hierzu per Sprachmeldung aus. So ist es mittlerweile bei in Autos angeschlossenen Mobiltelefonen üblich, mit ihnen statt der vom Straßenverkehr ablenkenden Bedienung mittels Berührung von Tasten oder Bildschirm über die Sprache zu kommunizieren. Die akustisch ausgegebenen Menüs können mittels des Verfahrens genauso wie die visuell dargestellten Menüs angepasst werden.

Besonders bevorzugt ist die automatische Erstellung eines neuen und Optimierung eines vorhandenen Nutzerprofils durch die Auswertung des Nutzerverhaltens. Mittels der automatischen Auswertung des Nutzerverhaltens kann das Nutzerprofil genau auf die Bedürfnisse oder Vorlieben des Nutzers abgestimmt werden. Auf diese Wiese können auch besonders einfach Änderungen im Nutzerverhaltens registriert und das Nutzerprofil daran angepasst werden.

Vorzugsweise werden für die automatische Erstellung und Optimierung des Nutzerprofils die vom Anwender genutzten Kommunikations-Funktionalitäten ausgewertet. Ein hierfür auswertbarer Parameter ist beispielweise die Nutzung der Telefonfunktion am Mobiltelefon in Sprache, Videotelefonie oder VOIP. Weitere zu berücksichtigende Parameter sind insbesondere die Nutzung der Navigation, von SMS oder MMS, des Internets oder des Radios. Dem Anwender werden auf diese Weise die von ihm am häufigsten genutzten Funktionalitäten in der Menüstruktur als erstes verfügbar gemacht oder besonders hervorgehoben, beispielsweise über ein One-Touch-Icon auf dem Eröffnungsbildschirm des Apple-iPhone^{®}. Die Bedienung des Mobiltelefons wird somit automatisch auf die häufig abgerufenen Funktionen hin optimiert.

Besonders bevorzugt ist die automatische Erstellung und Optimierung des Nutzerprofils durch die Auswertung der vom Anwender genutzten Kommunikationsziele und/oder Kommunikationsinhalte. Hierzu wird beispielsweise im Nutzerprofil gespeichert, wen er öfters anruft. Von Interesse ist insbesondere, ob die angerufenen Anschlüsse Firmen- oder Privatanschlüsse, Hotlines oder Servicenummern sind. Lädt er, wenn er im Internet ist, eher Musik herunter oder schaut er vermehrt Videoclips. Nutzt er beispielsweise des Öfteren bestimmte Programme oder besucht bestimmte Internetseiten, können ihm auf diese Weise weitere Programme oder Seiten ergänzenden Inhalten angeboten werden. Anhand solcher Kriterien können die Menüs derart gestaltet werden, das die häufig genutzten Ziele in der Bedienerführung bevorzugt aufgerufen werden können.

Vorzugsweise werden Ziele mit ähnlichem Inhalt als Alternative angeboten, beispielsweise über ein Internetportal zur Auswahl stehende ähnliche oder ergänzende Programme. Lädt der Nutzer zum Beispiel gerne Geschicklichkeits-Spiele herunter, können ihm weiter Spiele dieses Genres bei Besuch des Stores als erstes dargeboten werden. Wenn der Nutzer eine Funktion herunter lädt, kann ihm auch gleich eine weitere zum Herunterladen angeboten werden nach dem Motto "Nutzer, die wie Sie diese Funktion herunter laden, nehmen meist noch diese dazu". Dem Anwender wird somit ermöglicht, auf besonders einfache Art einen Überblick über vergleichbare oder ihn interessierende ergänzende Inhalte zu bekommen.

In einer bevorzugten Ausführungsform werden zumindest einzelne Parameter des Nutzerprofils mit Parametern der Nutzerprofile der mit ihm kommunizierenden Personen oder ganz anderer Nutzer abgeglichen. Stellen sich Übereinstimmungen in den verglichenen Parametern heraus, können sie ihre Interessengebiete untereinander abgleichen und gegenseitig ergänzen. Dies kann automatisch oder nur auf Wunsch des Anwenders erfolgen. Es kann auch vorteilhaft sein, wenn ein Nutzerprofil an einem ersten Endgerät, beispielsweise an einem ans Internet angeschlossenen Computer, generiert und dann auf ein beispielsweise mobiles Endgerät übertragen wird.

Ist sein Umfeld bekannt, können ihm vorzugsweise auch bestimmte soziale Anwendungen hervorgehoben nutzbar gemacht werden, beispielsweise der Besuch sozialer oder beruflicher Netzwerke wie studivz, xing oder facebook.

Vorzugsweise werden zur Erstellung und/oder Ergänzung des Nutzerprofils weitere über das Customer Relationship Management des Netzbetreibers und Vertragspartners verfügbare Parameter ausgewertet.

In einer weiteren bevorzugten Ausführungsform wird zur automatischen Erstellung und/oder Ergänzung des Nutzerprofils die Art und Weise der Bedienung des Mobiltelefons durch den Nutzer ausgewertet. Wenn der Anwender beispielsweise einzelne Menüpunkte schnell aufruft, er also in der Bedienung sicher ist, können die jeweiligen Menüs komplex aufgebaut sein. Ist er hingegen langsamer oder muss sich öfters durch Zurückgehen in der Menüstruktur in seiner Auswahl korrigieren, sollte das Menü weniger komplex aufgebaut sein, um ihm die Bedienung zu erleichtern. Beispielsweise wird hierfür die Größe und Anzahl der auf dem Bildschirm dargebotenen Icons variiert.

Vorzugsweise kann der Nutzer mindestens einen Parameter des Nutzerprofils verändern. Hierdurch wird er in die Lage versetzt, von ihm gewünschte Änderungen in der Menüführung zu forcieren oder unerwünschte rückgängig zu machen. Er erhält somit die Kontrolle über die Änderungen in der Menüführung und kann sich seine Menüs und die Anordnung der Menüpunkte individuell gestalten.

Vorzugsweise sind Nutzerprofile für verschiedene Typen von Anwendern vordefiniert, die von dem Nutzer auswählbar sind. Hierbei sind verschiedenen Nutzerprofile denkbar, beispielsweise für den durchschnittlichen Anwender, den innovativen und experimentierfreudigen, der an jeder neuen Anwendung interessiert ist, oder den an Spielen interessierten, dessen besonderes Augenmerk auf neu erschienenen Spielen liegt. Werden solche Nutzerprofile vorgehalten, kann der Anwender am Mobiltelefon eine Auswahl treffen, welches der Profile ihm selbst am nächsten kommt. Nach Auswahl des gewünschten vordefinierten Nutzerprofils wird dann die auf diesen Anwendertyp optimierte Menüstruktur auf der Benutzerschnittstelle umgesetzt. Somit ist eine Lernphase des Mobiltelefons, in der sich die Menüführung öfters ändern könnte, zum Erstellen des Nutzerprofils nicht mehr erforderlich. Der Nutzer wird also nicht durch sich häufig ändernde Anordnungen auf dem Bildschirm verwirrt.

In einer bevorzugten Ausführungsform wird ein vordefiniertes Nutzerprofil anhand der Ähnlichkeit mit dem erstellten Nutzerprofil ausgewählt. Hierbei wird überprüft, ob und wie weit das Nutzerverhalten des Anwenders mit einem vordefinierten Nutzerprofil übereinstimmt. Wenn dies der Fall ist, wird dieses Nutzerprofil zumindest in den übereinstimmenden Teilbereichen der weiteren Menüführung zu Grunde gelegt wird. Damit kann die Lernphase während der Erstellung des Nutzerprofils entscheidend abgekürzt werden. Die Auswahl kann manuell oder automatisch erfolgen.

In einer besonders bevorzugten Ausführungsform wird das Nutzerprofil nur erstellt oder geändert, wenn die Häufigkeit der Nutzung einer bestimmten Funktion einen bestimmten Schwellenwert überschreitet. Auch hiermit wird verhindert, das der Anwender durch zu häufige Änderung der Menüführung verwirrt wird. Dieser Schwellenwert kann vorgegeben und/oder vom Anwender einstellbar sein.

## Patentansprüche

1. Verfahren zur Steuerung einer Benutzerschnittstelle eines elektronischen Gerätes, insbesondere Benutzerschnittstelle eines Mobiltelefons mit einem berührungsempfindlichen grafischen Display,
**dadurch gekennzeichnet,**
**dass** in einem ersten Schritt ein Nutzerprofil vorgegeben wird,
**dass** in einem zweiten Schritt am Mobiltelefon ausführbare Funktionen entsprechend ihrer Relevanz im Verhältnis zu dem Nutzerprofil bewertet werden und
**dass** Menüpunkte, insbesondere in Form von Icons, zum Abruf und/oder zur Installation der am Gerät ausführbaren Funktionen in einer Art dargeboten werden, die ihrer Relevanz im Verhältnis zu dem Nutzerprofil entsprich.

2. Verfahren nach Anspruch 1,
**dadurch gekennzeichnet,**
**dass** die am Gerät ausführbaren Funktionen auf einem internen und/oder externen Speichermedium vorgehalten und von dort zur Installation abgerufen werden.

3. Verfahren nach Anspruch 1 oder 2,
**dadurch gekennzeichnet,**
**dass** die Menüpunkte insbesondere als grafische Darstellungen oder als Texte in einer Darstellung dargeboten werden, die ihre jeweilige Relevanz vermittelt.

4. Verfahren nach Anspruch 3,
**dadurch gekennzeichnet,**
**dass** die Menüpunkte in einer Anordnung, insbesondere in einer Reihenfolge dargeboten werden, die ihrer Relevanz entspricht.

5. Verfahren nach einem der vorherigen Ansprüche,
**dadurch gekennzeichnet,**
**dass** zur automatischen Erstellung und/oder Änderung des Nutzerprofils das Nutzer- und/oder das Nutzungsverhalten und/oder der Nutzungskontext ausgewertet werden.

6. Verfahren nach Anspruch 5
**dadurch gekennzeichnet,**
**dass** zur automatischen Erstellung und/oder Änderung des Nutzerprofils Kommunikationsziele und/oder Kommunikationsinhalte des Nutzers ausgewertet werden.

7. Verfahren nach einem der vorherigen Ansprüche,
**gekennzeichnet durch**
**dass** zur automatischen Erstellung und/oder Änderung des Nutzerprofils der Aufenthaltsort und/oder das Umfeld des Nutzers ausgewertet werden.

8. Verfahren nach einem der vorherigen Ansprüche,
**gekennzeichnet durch**
**dass** der Nutzer mindestens einen Parameter des erstellten Nutzerprofils verändert.

9. Verfahren nach einem der vorherigen Ansprüche,
**dadurch gekennzeichnet,**
**dass** dem Nutzer des Gerätes vordefinierte Nutzerprofile zur Auswahl angeboten werden.

10. Verfahren nach einem der vorherigen Ansprüche,
**dadurch gekennzeichnet,**
**dass** das Nutzerprofil erstellt oder geändert wird, wenn die Häufigkeit der Nutzung einer bestimmten Funktion einen bestimmten Schwellenwert überschreitet.
